(19) Europäisches Patentamt
European Patent Office
Office européen des brevets

(11) **EP 4 378 986 A1**

(12) # EUROPEAN PATENT APPLICATION

(43) Date of publication:
**05.06.2024 Bulletin 2024/23**

(21) Application number: **22210379.8**

(22) Date of filing: **29.11.2022**

(51) International Patent Classification (IPC):
***C08K 9/06*** *(2006.01)*

(52) Cooperative Patent Classification (CPC):
(C-Sets available)
**C08K 9/06;** C08K 3/015; C08K 5/0058;
C08K 5/5406; C08K 2003/0806; C08K 2003/085;
C08K 2003/0862; C08K 2003/2227;
C08K 2003/2241; C08K 2003/2296 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SABIC Global Technologies B.V.**
**4612 PX Bergen op Zoom (NL)**

(72) Inventors:
- **Isimjan, Tayirjan Taylor**
  **562125 Bengaluru (IN)**
- **Aloufi, Maher N**
  **562125 Bengaluru (IN)**
- **West, David**
  **562125 Bengaluru (IN)**
- **Ahmed, Toseef**
  **562125 Bengaluru (IN)**

(74) Representative: **Sabic INDIA Intellectual Property Group**
**P.O. Box 3008**
**6160 GA Geleen (NL)**

(54) **SELF-MIGRATING GERMICIDAL ADDITIVES**

(57) Polymer compositions that include self-migrating germicidal additives are described. The germicidal additive can be fluorinated and be dispersed throughout a polymer matrix and on a surface of the polymer composition. The fluorinated germicidal additive can include a support connected to a germicidal metal compound and a hydrophobic fluorinated ligand.

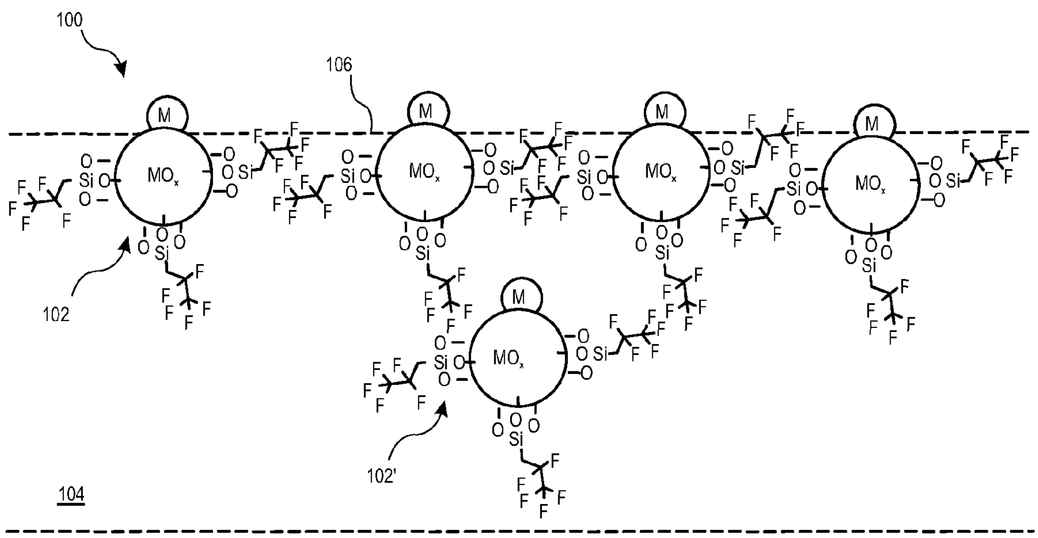


FIG. 1

EP 4 378 986 A1

(52) Cooperative Patent Classification (CPC): (Cont.)

C-Sets
**C08K 9/06, C08L 23/06**

## Description

### Technical Field

The invention generally concerns polymeric compositions comprising germicidal additives. The germicidal additives can be fluorinated and can be dispersed throughout the polymeric matrix and on at least a portion of a surface of a polymer composition. The fluorinated germicidal additives can migrate through the polymeric matrix and to the surface of the polymeric composition.

### Background Art

A variety of articles used in domestic and industrial applications are made of plastic. For example, medical equipment and materials, vehicles, water treatment equipment and materials, etc.). Many of these applications require disinfecting regimes (e.g., liquids, UV-C radiation, ozone, disinfecting vapors or mists, etc.). Although disinfecting regimes are effective, they can be time consuming and costly. To overcome disinfecting regimes, "self-sterilizing" surfaces have been described. For example, U.S. Patent No. 11,052,385 to Van Buskirk et al., described photocatalytic materials integrated into composite surfaces. Chinese Patent Application Publication No. 11336886 to Wenming et al., describes titanium dioxide ($TiO_2$) wires modified with silver (Ag) and copper (Cu) for rainwater disinfection. However, many applications suffer from loss of germicidal activity with time due to the active metal leaching or the germicidal additives being embedded inside a polymer and not exposed to the surface.

### SUMMARY OF THE INVENTION

A solution to at least one of the aforementioned problems associated with germicidal additives has been discovered. In some aspects, the invention provides a germicidal polymer composition that includes a fluorinated germicidal additive dispersed throughout the polymer matrix of the composition and on at least a portion of a surface of the polymer composition. The polymer composition of the present invention can be comprised in at least a portion of an article of manufacture, preferably comprised in at least a portion of a surface of the article of manufacture. The germicidal additive(s) of the present invention provides an advantage of decreased Van der Waals interaction between the germicidal additive(s) and the polymer matrix. For example, a polymer matrix of the polymer composition can have a surface tension value of at least 10 $mN/cm^2$ greater than the surface tension value of the germicidal additive(s). This can result in the germicidal additive(s) being capable of migrating to at least a portion of a surface of the polymer composition. The migration of the germicidal additive(s) can be initiated or quickened, or both, by placing the polymer composition under pressure. In addition, the low surface energy of the germicidal additive(s) can inhibit additive aggregation. The germicidal polymer compositions can be effective against bacteria, fungi, and/or viruses. In some aspects, a surface of a polymeric composition of the present invention can have an antibacterial efficacy of at least 80%, preferably 90%, more preferably 99% after 24 hours as measured by JISZ 2801:2010 method, when the bacteria includes *Staphylococcus aureus* and *Escherichia coli.*

In one aspect of the present invention germicidal polymer compositions are described. A germicidal polymer composition can include a polymer composition that can have a fluorinated germicidal additive dispersed throughout the composition and on a surface of the composition. The polymer composition can include a polymeric matrix (e.g., the polymeric matrix can make up at least a portion of the internal volume of the composition) and a surface (e.g., the outer surface of the composition can be exposed to an external environment (e.g., air)). The polymer composition can include a thermoplastic polymer *(e.g.,* a polyolefin polymer), a polycarbonate polymer, a modified rubber polymer, a nylon, a polyethylene terephthalate (PET), a polyvinyl chloride, or any combination or blend thereof. The fluorinated germicidal additive can include a support attached to a germicidal metal compound (e.g., silver (Ag), copper (Cu), nickel (Ni), or any oxides, alloys, or combinations thereof) and a hydrophobic fluorinated ligand. The support can include titanium oxide ($TiO_2$), zinc oxide (ZnO), silica ($SiO_2$), alumina ($Al_2O_3$), zeolite, or a combination thereof. A pore volume of the support can be 0.1 to 10 mL($H_2O$)/g. The germicidal metal compound can include a bimetallic metal and/or trimetallic metal having a metal/metal ratio of 1:1 to 1:100. In some aspects, the germicidal metal compound can be a nanometal compound. A content of the germicidal nanometal compound in the germicidal additive can ranges from 1 ppm to 500,000 ppm. In some aspects, the germicidal nanometal compound can have a size of 15 nm to 30 nm, preferably 20 nm. The hydrophobic fluorinated ligand can include a fluorinated group having a formula of $CH_2CH_2(CF_2)_xCF_3$ where x is 0 to 10, preferably 7. The hydrophobic fluorinated ligand can have a structure of any one of the following

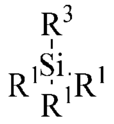 , 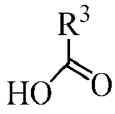 , 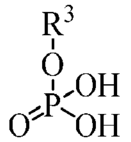 , 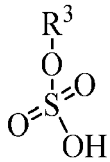

where $R^1$ is a chloride or $OR^2$, $R^2$ is $C_nH_{2n+1}$, n ranges from 1 to 3, and $R^3$ is the fluorinated group. In one preferred aspect, the hydrophobic fluorinated ligand can have the structure of $SiR^3(R^1)_3$ where $R^1$ is $OC_nH_{2n+1}$ where n ranges from 1 to 3, and $R^3$ is the fluorinated group. In another preferred aspect, the hydrophobic fluorinated ligand can have the structure of where $SiR^3(R^1)_3$, where $R^1$ is $C_2H_5$ and $R^3$ is $C_{10}H_4F_{17}$ (*i.e.,* $Si(C_{10}H_4F_{17})(C_2H_5)_3)$). An amount of the germicidal additive in the polymer composition can be 0.1 wt.% to 50 wt.% based on the total weight of the polymer composition. In some aspects, at least a portion of the germicidal additive is at a surface of the polymer composition. A surface concentration of the germicidal additive in the polymer composition can be from 0.01 wt.% to 10 wt.%, preferably 0.01 wt.% to 5 wt.%, more preferably 0.01 wt.% to 1 wt.% as determined by SEM/EDX. In some aspects, a surface of the polymeric composition can include an outer surface of the polymeric composition. In some aspects, the germicidal additive being at a surface of a polymer composition includes the germicidal additive being on an outer surface such that it is exposed to the environment that the composition is in or exposed to (e.g., if an outer surface of the polymer composition is exposed to air, then at least a portion of the germicidal additive can also be exposed to air).

In another aspect of the present invention methods to prepare the germicidal polymeric compositions of the present invention are described. A method can include extruding the fluorinated germicidal additive with the polymer composition at a temperature of 150 °C to 300 °C to produce the polymeric composition of the present invention. The fluorinated germicidal additive can be produced by first impregnating a support with metal precursor to form a metal oxide/support material (step a). The metal oxide/support material can optionally be reduced under a hydrogen atmosphere at 200 °C to 500 °C to produce a metal/support material (step b). The metal oxide/support material, metal/support material, or both can be contacted with a hydrophobic fluorinated ligand to produce the fluorinated germicidal additive (step c).

Other embodiments of the invention are discussed throughout this application. Any embodiment discussed with respect to one aspect of the invention applies to other aspects of the invention as well and vice versa. Each embodiment described herein is understood to be embodiments of the invention that are applicable to other aspects of the invention. It is contemplated that any embodiment or aspect discussed herein can be combined with other embodiments or aspects discussed herein and/or implemented with respect to any method or composition of the invention, and vice versa. Furthermore, compositions of the invention can be used to achieve methods of the invention.

The following includes definitions of various terms and phrases used throughout this specification.

"Nanostructure" or "nanomaterial" refer to an object or material in which at least one dimension of the object or material is equal to or less than 1000 nm (e.g., one dimension is 1 to 1000 nm in size). In a particular aspect, the nanostructure includes at least two dimensions that are equal to or less than 1000 nm *(e.g.,* a first dimension is 1 to 1000 nm in size and a second dimension is 1 to 1000 nm in size). In another aspect, the nanostructure includes three dimensions that are equal to or less than 100,000 nm *(e.g.,* a first dimension is 1 to 1000 nm in size, a second dimension is 1 to 1000 nm in size, and a third dimension is 1 to 1000 nm in size). The shape of the nanostructure can be of a wire, a particle (e.g., having a substantially spherical shape), a rod, a tetrapod, a hyper-branched structure, a tube, a cube, or mixtures thereof. "Nanoparticles" include particles having an average diameter size of 1 to 1000 nanometers.

The terms "about" or "approximately" are defined as being close to as understood by one of ordinary skill in the art. In one non-limiting embodiment, the terms are defined to be within 10%, preferably within 5%, more preferably within 1%, and most preferably within 0.5%.

The terms "wt.%", "vol.%", or "mol.%" refers to a weight percentage of a component, a volume percentage of a component, or molar percentage of a component, respectively, based on the total weight, the total volume of material, or total moles, that includes the component. In a non-limiting example, 10 grams of component in 100 grams of the material is 10 wt.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification includes any measurable decrease or complete inhibition to achieve a desired result.

The term "effective," as that term is used in the specification and/or claims, means adequate to accomplish a desired, expected, or intended result.

The use of the words "a" or "an" when used in conjunction with any of the terms "comprising," "including," "containing," or "having" in the claims, or the specification, may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The polymer compositions of the present invention can "comprise," "consist essentially of," or "consist of' particular ingredients, components, compositions, *etc.* disclosed throughout the specification. With respect to the transitional phrase "consisting essentially of," in one non-limiting aspect, a basic and novel characteristic of the polymer compositions of the present invention are their effectiveness against bacteria, fungi, and/or viruses. For example, a surface of a polymeric composition and/or a germicidal additive can have an antibacterial efficacy of at least 80%, preferably 90%, more preferably 99% after 24 hours as measured by JISZ 2801:2010 method, when the bacteria includes *Staphylococcus aureus* and *Escherichia coli.*

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. Additionally, it is contemplated that changes and modifications within the spirit and scope of the invention will become apparent to those skilled in the art from this detailed description. In further embodiments, features from specific embodiments may be combined with features from other embodiments. For example, features from one embodiment may be combined with features from any of the other embodiments. In further embodiments, additional features may be added to the specific embodiments described herein.

## BRIEF DESCRIPTION OF THE DRAWINGS

Advantages of the present invention may become apparent to those skilled in the art with the benefit of the following detailed description and upon reference to the accompanying drawings.

**FIG. 1** is an illustration of germicidal polymer composition of the present invention.

**FIG. 2** are scanning electron microscopy (SEM) images and energy dispersive X-ray (EDX) mapping of the germicidal metal additive (reduced $Ag/Cu/TiO_2$): (A) & (B) EDX results, (C) SEM images of the EDX mapped area, (D) Ti-mapping at 5 um, (E) Cu-mapping at 5 μm, (F) Ag-mapping at 5 μm, (G) Cu-mapping at 500 nm, and (H) Ag-mapping at 500 nm.

**FIG. 3** shows the X-ray diffraction (XRD) images of the silver based additives.

**FIG. 4** shows transmission electron microscopy (TEM) image of Ag/Cu/TiO2/PTEs (C and F) and the corresponding elemental mappings of Ti, Ag, Cu, and F (A, B, D, and E).

**FIG. 5** shows the SEM/EDX images of the germicidal polymer composition of the present invention to determine surface migration: (A) SEM image of 5 min holding time at 180 °C during the compress molding, EXD mapping of Ti, and surface elemental distribution; (B) SEM image of 15 min holding time at 180 °C during the compress molding, EXD mapping of Ti, and surface elemental distribution; (C) SEM image of 30 min holding time at 180 °C during the compress molding, EXD mapping of Ti, and surface elemental distribution.

**FIG. 6** shows a graphical representation of antibacterial efficacy of silver/Cupper based additives towards *Staphylococcus aureus* or *Escherichia coli.* In the graph, T S, BZ, and Z indicate $TiO_2$, $SiO_2$, Beta-Zeolite, and ZnO; AC= Ag/Cu, AZ =Ag/Zn (1:1) at a mole ratio of 1:1; AC or AZ with a 100, 300, 500 indicates Ag/Cu or Ag/Zn concentrations of 100, 300, 500 ppm; R indicates the samples were reduced under $H_2$. The absence of an R indicates a metal oxide. LLDPE-118 was used as the polymer matrix.

While the invention is susceptible to various modifications and alternative forms, specific embodiments thereof are shown by way of example in the drawings. The drawings may not be to scale.

## DETAILED DESCRIPTION OF THE INVENTION

A solution to at least one of the problems associated with polymer compositions having germicidal properties has been discovered. In one aspect, the invention provides a germicidal polymer composition having a germicidal additive dispersed in and on the surface of the polymer composition. The germicidal additive can be modified with both active components (e.g., germicidal metal compound) and low surface energy materials (e.g., fluorinated ligand) to minimize

self-aggregation within the polymeric composition (e.g., within the polymeric matrix), to allow for migration of the active components to the surface of the polymer composition, and/or to improve the miscibility of the additive within the polymer composition. Such modifications can provide the advantage of keeping the metals in metallic state to inhibit metal leaching while retaining germicidal activity. In some aspects, the germicidal additives of the present invention can remain evenly dispersed in the composition and/or have reduced aggregation with each other when the fluorinated ligands have a Zeta potential of at least 6 $mN/cm^2$.

These and other non-limiting aspects of the present invention are discussed in further detail in the following sections with reference to the Figures.

## Germicidal Polymer Composition

The germicidal polymer compositions of the present invention can include a polymer matrix, a surface, and a germicidal additive. FIG. 1 is an illustration of the germicidal polymer composition 100. Germicidal polymer composition can include germicidal additive 102 dispersed in polymer matrix 104. Germicidal additive 102 can include hydrophobic fluorinated ligands (e.g., $O_3Si(C_3H_2F_5)$) and at least one germicidal metal compound (M) bound to a support ($MO_x$). At least a portion of the germicidal additive 102 (e.g., the germicidal metal compound (M)) can be present at surface 106 of polymer composition 100. Being present at a surface can include having a portion of the additive 102 being exposed to the environment that composition 100 is in. For example, if the composition 100 is a surface of a car part, then the additive 102 can be exposed to the environment the car part is in (e.g., air). The additive 102 can be above the surface 106 or in-line / even with the surface 106. As the germicidal additive 102 on the surface of polymer composition 100 are removed through attrition or force, germicidal additive 102' dispersed in the polymer matrix can migrate through polymer matrix 104 to surface 106. Movement of germicidal additive 102' through polymer matrix 104 can be promoted by the fluorinated ligand attached to the surface of the support. The fluorinated ligand can lower the surface tension of the germicidal additive such that it can move through the polymer matrix with low pressure. In some aspects, migration of the fluorinated ligands to the surface of the polymer composition can occur under atmospheric pressure (e.g., 0.1 mPa to 10 mPa) or can be triggered by application of pressure. Application of pressure can be physical such as by touching, pressing, feeling, rubbing, *etc.,* of the surface of the polymer composition or can be by increasing the pressure of the environment it is in (*e.g.*, increasing from atmospheric pressure to 10 mPa.

The polymeric composition can be in a pellet form, a powder, or a molded part. In some aspects, the polymeric composition is an extrusion molded article, an injection molded article, a compression molded article, a rotational molded article, a blow molded article, an injection blow molded article, a 3-D printed article, a thermoformed article, a foamed article, or a cast film. The polymeric composition can be comprised in an article of manufacture. Non-limiting examples of an article of manufacture can include an exterior and/or interior vehicle part, an exterior and/or interior train part, an exterior and/or interior airplane part, an exterior and/or interior building part, an electrical device part, an electronic device part, an industrial device part, medical packing film and/or component, a medical tray, a blister pack, a medical component container, a food packing film, or a food container. The polymer composition, and thus, the article of manufacture, can have an efficacy against bacteria, viruses, protozoa, algae, and/or fungi. In a preferred aspect, and due to the presence of the germicidal additive, an antibacterial (e.g. *Staphylococcus aureus, Escherichia coli,* or a combination thereof) efficacy of at least 80%, preferably 90%, more preferably 99% after 24 hours of incubation as measured by JISZ 2801:2010 method can be realized for the polymeric compositions of the present invention. In some embodiments, a surface concentration of the germicidal additive in the polymer composition can be 0.01 wt.% to 10 wt.%, or 0.01 wt.%, 0.015 wt.%, 0.1 wt.%, 0.15 wt.% 1 wt.%, 1.5 wt.%, 2 wt.%, 2.5 wt.%, 3 wt.%, 3.5 wt.%, 4 wt.% 4.5 wt.%, 5 wt.%, 5.5 wt.%, 6 wt.%, 6.5 wt.%, 7 wt.%, 7.5 wt.%, 8 wt.%, 8.5 wt.%, 9 wt.%, 9.5 wt.%, 10 wt.%, or any range or value there between. Surface concentration can be determined using known methods (e.g., SEM/EDX). A content of the fluorinated germicidal additive in the polymer composition can be 0.1 wt.% to 50 wt.%, or 0.1 wt.%, 1 wt.%, 5 wt.%, 10 wt.%, 15 wt.%, 20 wt.%, 25 wt.%, 30 wt.%, 35 wt.%, 40 wt.%, 45 wt.%, 50 wt.% or any range or value there between based on the total weight of the polymer composition. In some aspects, the polymer matrix of the polymer composition can have surface tension value of at least 10 $mN/cm^2$ greater than the germicidal additive surface tension value. For example, at least 10 $mN/cm^2$, 15 $mN/cm^2$, 20 $mN/cm^2$, 25 $mN/cm^2$, 30 $mN/cm^2$, 35 $mN/cm^2$ or greater, or 10 $mN/cm^2$ to 50 $mN/cm^2$ or any value or range there between.

### a. Polymer matrix

The polymer matrix can include a thermoplastic polymer, a thermoset polymer, or a combination or blend thereof. The surface tension of a polymer matrix (e.g., a polyolefin) can be 20 to 55 $mN/cm^2$ *(e.g.,* 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50 $mN/cm^2$ or any value or range there between). Amounts of the polymer matrix in the polymer composition can range from 50 wt.% to 99.99 wt.% or 35 wt.%, 40 wt.%, 45 wt.%, 50 wt.%, 55 wt.%, 60 wt.%, 65 wt.%, 70 wt.%, 75 wt.%, 80 wt.%, 85 wt.%, 90 wt.%,

95 wt.%, 96 wt.%, 97 wt.%, 98 wt.%, 99 wt.%, 99.99 wt.% or any value or range there between.

Thermoplastic polymeric matrices have the ability to become pliable or moldable above a specific temperature and solidify below the temperature. The polymeric matrix of the composites can include thermoplastic or thermoset polymers, co-polymers thereof, and blends thereof that are discussed throughout the present application. Non-limiting examples of thermoplastic polymers include polyethylene terephthalate (PET), a polycarbonate (PC) family of polymers, polybutylene terephthalate (PBT), poly(1,4-cyclohexylidene cyclohexane-1,4-dicarboxylate) (PCCD), glycol modified polycyclohexyl terephthalate (PCTG), poly(phenylene oxide) (PPO), polyolefin, polypropylene (PP), polyethylene (PE), polyvinyl chloride (PVC), polystyrene (PS), polymethyl methacrylate (PMMA), polyethyleneimine or polyetherimide (PEI) and their derivatives, thermoplastic elastomer (TPE), terephthalic acid (TPA) elastomers, poly(cyclohexanedimethylene terephthalate) (PCT), polyethylene naphthalate (PEN), polyamide (PA), polysulfone sulfonate (PSS), sulfonates of polysulfones, polyether ether ketone (PEEK), polyether ketone ketone (PEKK), acrylonitrile butyldiene styrene (ABS), polyphenylene sulfide (PPS), co-polymers thereof, or blends thereof. In addition to these, other thermoplastic polymers known to those of skill in the art, and those hereinafter developed, can also be used in the context of the present invention. In some aspects of the invention, the preferred thermoplastic polymers include polypropylene, polyamide, polyethylene terephthalate, a polycarbonate (PC) family of polymers, polybutylene terephthalate, poly(phenylene oxide) (PPO), polyetherimide, polyethylene, co-polymers thereof, or blends thereof. In more preferred aspects, the thermoplastic polymers include polypropylene, polyethylene, polyamide, a polycarbonate (PC) family of polymers, co-polymers thereof, or blends thereof.

Thermoset polymers are polymers that can be cured/cross-linked. Thermoset polymers can be malleable prior to heating and capable of forming a mold. The matrix can be made from a composition having a thermoplastic polymer and can also include other non-thermoplastic polymers, additives, and the like, that can be added to the composition. Thermoset polymeric matrices can be cured or become cross-linked and tend to lose the ability to become pliable or moldable at raised temperatures. Non-limiting examples of thermoset polymers used to make the polymer film include epoxy resins, epoxy vinylesters, alkyds, amino-based polymers (e.g., polyurethanes, urea-formaldehyde), diallyl phthalate, phenolics polymers, polyesters, unsaturated polyester resins, dicyclopentadiene, polyimides, silicon polymers, cyanate esters of polycyanurates, thermosetting polyacrylic resins, bakelite, duroplast, benzoxazines, or co-polymers thereof, or blends thereof.

**b. Fluorinated germicidal additive**

The fluorinated germicidal additive can include a support attached to a germicidal metal compound and a fluorinated ligand. The germicidal additive can have a surface tension of 5 to 20 $mN/cm^2$ *(e.g.,* 5, 6, 7, 8, 9, 10, 11, 12, 13, 14, 15, 16, 17, 18, 19 20 $mN/cm^2$ or any range or value there between). The difference between the polymer and surfactant is greater than 10 $nM/cm^2$ in order to have sufficient force to push the additive to the surface *(e.g.,* 11, 15, 20, 30, 40 *etc.*). The fluorinated germicidal additive of the present invention can include up to 50 wt. %, from 0.1 wt.% to 20 wt. %, from 1 wt. % to 10 wt. %, or from 3 wt. % to 7 wt. % and all wt.% or 1 wt.%, 2 wt.%, 3 wt.% 4 wt.%, 5 wt.%, 6 wt.%, 7 wt.%, 8 wt.%, 9 wt.%, 10 wt.%, 20 wt.%, 25 wt.%, 30 wt.%, 35 wt.%, 40 wt.%, 45 wt.%, 50 wt.% or any value or range there between of the germicidal metal compound based on the total weight of the fluorinated germicidal additive.

(i) support

The support can be any support capable of being attached to a germicidal metal compound and a fluorinated ligand. The support can have pore volume of the support is 0.1 to 10 $mL(H_2O)/g$ or 0.1, 0.5, 1.5, 2, 2.5, 3, 3.5, 4, 4.5, 5, 5.5, 6, 6.5, 7, 7.5, 8, 8.5, 9, 9.5 10 $mL(H_2O)/g$ or any value or range there between. Non-limited examples of supports include $TiO_2$, ZnO, $SiO_2$, $Al_2O_3$, zeolite, or a combination thereof.

(ii) germicidal metal compound

The germicidal metal compound can include any metal and/or metal oxide active against, bacteria, fungi, viruses, or a combination or mixture thereof. The fluorinated germicidal additive of the present invention can include up to 50 wt. %, from 0.1 wt.% to 20 wt. %, from 1 wt. % to 10 wt. %, or from 3 wt. % to 7 wt. % and all wt.% or 1 wt.%, 2 wt.%, 3 wt.% 4 wt.%, 5 wt.%, 6 wt.%, 7 wt.%, 8 wt.%, 9 wt.%, 10 wt.%, 20 wt.%, 25 wt.%, 30 wt.%, 35 wt.%, 40 wt.%, 45 wt.%, 50 wt.% or any value or range there between, of the metal and/or metal oxide based on the total weight of the fluorinated germicidal additive. In a specific embodiment, the fluorinated germicidal additive can include 5 wt.% of metal and/or metal oxide. Non-limiting examples of metal compounds include silver (Ag), copper (Cu), nickel (Ni), or any oxides, alloys, or combinations thereof. In some aspects, the germicidal metal compound can include a bimetallic metal and/or trimetallic metal having a metal/metal ratio of 1:1 to 1:100 or 1:10, 1:15, 1:20, 1:25, 1:50, 1:75, 1:100 or any value or range there between.. For example, the metal compound can be AgCu metal or AgCu metal oxide, AgNi metal or metal

oxide, AgCuNi metal alloy. In some aspects, the germicidal metal compound includes nanometals. The nanometal can have a size of 15 nm to 30 nm or 15 nm, 16 nm, 17 nm, 18 nm, 19 nm, 20 nm, 21 nm, 22 nm, 23 nm, 24 nm, 25 nm, 26 nm, 27 nm, 28 nm, 29 nm, 30 nm or any range or value thereof. A content of the nanometal in the fluorinated germicidal additive can be 1 ppm to 500,000 ppm or 1 ppm, 100 ppm, 500 ppm, 1,000 ppm, 5,000 ppm, 10,000 ppm, 50,000 ppm, 100,000 ppm, 150,000, 200,000 ppm, 250,000 ppm, 300,000 ppm, 350,000 ppm, 400,000 ppm, 450,000 ppm, 500,000 ppm or any value or range there between, based on the total weight of the fluorinated germicidal additive.

(iii) fluorinated ligand

The fluorinated germicidal additive can include one or more fluorinated ligands. The fluorinated ligands can be hydrophobic. In some aspects, a hydrophobic fluorinated ligand can include a fluorinated group having a formula of $CH_2CH_2(CF_2)_xCF_3$ where x is 0 to 10 (*e.g.,* 0, 1, 2, 3, 4, 5, 6, 7, 8, 9, 10 or any value or range there between). Non-limiting examples of hydrophobic fluorinated ligands can have the following structures:

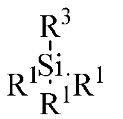 , 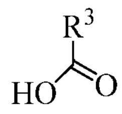 , 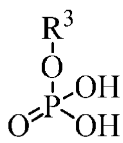 , 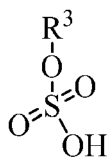 ,

or the like.

$R^1$ can be a chloride (Cl) or $OR^2$. $R^2$ can be $C_nH_{2n+1}$ where n ranges from 1 to 3 *(e.g.,* 1, 2, 3, or any value or range there between). Non-limiting examples of $R^2$ groups include $CH_3$ (methyl), $C_2H_5$ (ethyl), $C_3H_7$ (propyl) groups. $R^3$ can be the fluorinated group. The fluorinated group can have the formula of $CH_2CH_2(CF_2)_xCF_3$ where x is 0 to 10 *(e.g.,* 0, 1, 2, 3, 4, 5, 6, 7, 8, 9, 10 or any value or range there between). Non-limiting examples of the fluorinated ligand include $CH_2CH_2CF_3$, $CH_2CH_2CF_2CF_3$, $CH_2CH_2CF_2CF_2CF_3$, $CH_2CH_2CF_2CF_2CF_2CF_3$, $CH_2CH_2CF_2CF_2CF_2CF_2CF_3$, $CH_2CH_2CF_2CF_2CF_2CF_2CF_2CF_3$, $CH_2CH_2CF_2CF_2CF_2CF_2CF_2CF_2CF_3$, $CH_2CH_2CF_2CF_2CF_2CF_2CF_2CF_2CF_2CF_3$, $CH_2CH_2CF_2CF_2CF_2CF_2CF_2CF_2CF_2CF_2CF_3$, $CH_2CH_2CF_2CF_2CF_2CF_2CF_2CF_2CF_2CF_2CF_2CF_3$, $CH_2CH_2CF_2CF_2CF_2CF_2CF_2CF_2CF_2CF_2CF_2CF_2CF_3$. In some aspects, the hydrophobic fluorinated has a structure of $(R^1)_3SiR^3$ where $R^1$ is $OR^2$ and $R^3$ is the fluorinated group (*e.g.,* $CH_2CH_2(CF_2)_xCF_3$ where x is 0 to 10). In another aspect, the hydrophobic fluorinated ligand is $(R^1)_3SiR^3$ where $R^1$ is $C_2H_5$ and $R^3$ is $C_{10}H_4F_{17}$ (e.g. $CH_2CH_2(CF_2)_xCF_3$ where x is 7). The hydrophobic fluorinated ligand can have a surface tension of 6 to 19 $mN/cm^3$ or 6 $mN/cm^3$, 7 $mN/cm^3$, 8 $mN/cm^3$, 9 $mN/cm^3$, 10 $mN/cm^3$, 11 $mN/cm^3$, 12 $mN/cm^3$, 13 $mN/cm^3$, 14 $mN/cm^3$, 15 $mN/cm^3$, 16 $mN/cm^3$, 17 $mN/cm^3$, 18 $mN/cm^3$, 19 $mN/cm^3$, or any value or range thereof.

(iv) Preparation of the fluorinated germicidal additive

The fluorinated germicidal additive can be prepared using dry impregnation or impregnation to incipient wetness methods. Scheme I is an illustration of producing the fluorinated germicidal additive of the present invention.

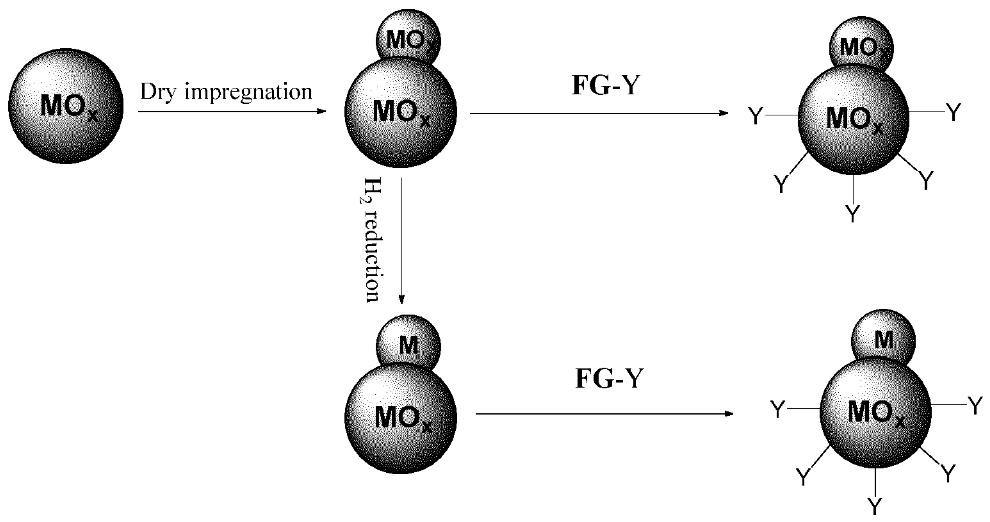


**M (Bioactive metals):** Ag, Cu, Ni, Ag/Cu, Ag/Ni, Cu/Ni, and any combinations

**MOx (Bioactive metal oxides):** $Ag_2O$, CuO, NiO and any combinations

**MOx (Metal oxide supports):** $TiO_2$, ZnO, $SiO_2$, $Al_2O_3$, Zeolite etc.

**FG = Functional groups:** $-PO_4H_2$, $-SO_3H$, $-SiR_3$ (R: $-OCH_3$, $OC_2H_5$, Cl)
**Y = Fluorinated Hydrophobic tail:** $-CH_2-(CF_2)_n-CF_3$

Scheme I

In some aspects, the support can be mixed with a solution of appropriate concentration corresponding in quantity to the total known pore volume or slightly less *(e.g.,* at least 80% or the known pore volume). Metal additive compound precursors (e.g., metal nitrates, metal oxides, or the like) can be dissolved in purified water (e.g., deionized) at a desired concentration based on the total metal in the fluorinated germicidal additive to produce a metal precursor/water solution. The metal precursor/water solution can be mixed with the support using agitation until a gel-like material is formed. The gel-like material can be dried at 85 to 110 °C or 90 to 100 °C to remove the water and annealed at 350 °C to 500 °C or 400 °C to 450 °C for a desired amount of time produce the metal oxide/support. After drying, the dried material can optionally be reduced in size (*e.g.*, crushing). The dried material can be used as in the metal oxide / support form. In some embodiments, the metal oxide /support can be reduced to the metal form by contacting the metal oxide/support with $H_2$ gas at 325 °C to 350 °C, or 330 °C to 340 °C for a desired amount of time (*e.g.,* 1 to 10 hours) to produce the metal / support product.

The metal/support and/or metal oxide/support can be dry impregnated with a fluorinated ligand described in Section A(b)(iii). For example, the metal/support and/or metal oxide/support can be mixed with the fluorinated ligand and enough solvent (*e.g.*, alcohol, ethanal, propanol) to aid mixing, but not make a dispersion. The resulting mixture can be further mixed in a mixing unit (*e.g.*, powder mixer) for a desired amount of time, dried at 85 to 110 °C or 90 to 100 °C until dry (*e.g.,* 1 to 10 hours) to produce the fluorinated germicidal additive of the present invention.

**c. Other additives**

Non-limiting examples of other additives that can be included in the germicidal polymer composition include an anti-fogging agent (*e.g.,* a glycerol ester), a coupling agent, an antioxidant, a heat stabilizer, a flow modifier, a colorant, an impact modifier, an UV absorber, and the like, or any combination thereof. For example, the polymer composition invention an additive or multiple additives in addition to the germicidal additive of the present invention. For example, the polymer composition can include an amount of additives of 0 and 20 wt. %, > 0 and < 20 wt. % or between 0.5 wt. % and < 20 wt. %, between 0.5 to 15 wt. %, between 0.5 to 12 wt. % or between 0.5 to 8 wt. % based on the total weight of the polymer composition, where the sum of the polymer(s), the germicidal additive and the additives can be 100 wt. % based on the total weight of the composition.

### Preparation of Germicidal Polymer Composition

The polymeric composition can be made using known polymer producing methods. For example, a polymer matrix can be compounded (*e.g.*, extruded, blended, kneaded, and the like) with the germicidal additive of the present invention and optional other additives to produce the polymeric composition of the present invention. Compounding can be done, for example, in air or under an inert atmosphere (*e.g.*, nitrogen). During compounding, the polymer material can soften or melt and the germicidal and optional additives are dispersed in the polymer matrix. Temperature of compounding can range from 150 °C to 300 °C, or 175 °C to 275 °C, 200 °C to 250 °C, or 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C or any value or range there between. Notably, the fluorinated ligand of the germicidal additive can inhibit aggregation of the additives during compounding. The resulting polymer composition can be formed into an article. Non-limiting examples of forming include injection molding, extrusion, compression molding, rotational molding, blow molding, injection blow molding, 3-D printing, thermoforming, foaming, or casting.

### Articles of Manufacture

The resulting formed article (*e.g.,* an extrusion molded article, an injection molded article, a compression molded article, a rotational molded article, a blow molded article, an injection blow molded article, a 3-D printed article, a thermoformed article, a foamed article, or a cast film) can be comprised in an article of manufacture or is an article of manufacture. Non-limiting examples of articles of manufacture include an exterior and/or interior vehicle part, an exterior and/or interior train part, an exterior and/or interior airplane part, an exterior and/or interior building part, an electrical device part, an electronic device part, an industrial device part, medical packing film and/or component, a medical tray, a blister pack, a medical component container, a food packing film, or a food container.

## EXAMPLES

The present invention will be described in greater detail by way of specific examples. The following examples are offered for illustrative purposes only, and are not intended to limit the invention in any manner. Those of skill in the art will readily recognize a variety of noncritical parameters which can be changed or modified to yield essentially the same results.

### Example 1

### (Synthesis of fluorinated germicidal additive)

To a $TiO_2$ support (4.8 mL 80% of the pore volume of 10 g $TiO_2$) was added $AgNO_3$ (0.5 g) and $Cu(NO_3)_2$ (0.7 g). The resulting mixture was dried at 100 °C for 2 hrs and then annealed at 450 °C for 3 hrs to produce 5 wt.% Ag/Cu(1:1)/$TiO_2$. The 5 wt.% Ag/Cu(1:1)/$TiO_2$ (5 g) was reduced with $H_2$ (330 °C, 3 bar) for 3 hours to yield the reduced germicidal metal/support of the present invention (5 wt.% Ag/Cu(1:1)/$TiO_2$-red). The 5 wt.% Ag/Cu(1:1)/$TiO_2$ (10 g) was dry impregnated with 0.5 wt.% (0.005 g) of 1H,1H,2H,2H-perfluorodecyltriethoxysilane (PTES, Sigma-Aldrich®, USA) in 10 mL ethanol. The resulting mixture was further mixed in a powder mixer for 5 min, dried at 100 °C for 3 hours to give the final product of 5 wt.% Ag/Cu (1:1)/$TiO_2$-PTES. The same procedure was used to make the 5 wt.% Ag/Cu(1:1)/$TiO_2$-PTES-red. FIG. 2 shows the SEM images and EDX mapping of the reduced Ag/Cu/$TiO_2$: (A) & (B) EDX results, (C) SEM images of the EDX mapped area, (D) Ti-mapping at 5 um, (E) Cu-mapping at 5 μm, (F) Ag-mapping at 5 μm, (G) Cu-mapping at 500 nm, and (H) Ag-mapping at 500 nm. FIG. 3 shows The XRD spectrum of the germicidal metal compound. As shown in FIG. 3, the Ag and Cu signals are overlapped. Therefore, the Ag crystalline size was calculated according to Ag peaks from Ag/ZnO/$TiO_2$. The result indicated that the crystalline size of the Ag is around 20 nm, which is consistent with the EDX -mapping suggesting nano-level dispersion of the metal active sites.

Other germicidal metal compounds were made using this procedure. Table 1 lists the support and the quantity of the total known pore volume ($g_{H2O}$ / $g_{support}$). Samples that were prepared are AgCu (1:1)/ $SiO_2$, AgCu (1:1)/ZSM-5, and AgCu (1:1)/ZnO, AgZn (1:1)/$SiO_2$, and Ag/Zn/ZSM-5.

Table 1

| Support | quantity to the total known pore volume (g $_{H2O}$/g support) |
|---|---|
| $TiO_2$ | 0.6 |
| ZnO | 0.55 |

(continued)

| Support | quantity to the total known pore volume (g $_{H2O}$/g support) |
|---|---|
| $SiO_2$ | 1.6 |
| ZSM-5 (beta zeolite) | 0.45 |

**Example 2**

**(Synthesis of germicidal polymer composition)**

The 5 wt% Ag/Cu/$TiO_2$-PTES (1 wt.%, 0.1 g, Ag/Cu (500 ppm)) was mixed with LLDPE-118 (10 g) using the powder mixed for 5 min and then extruded using a twin-screw compounder (Xplore-MC15) at the following conditions under a nitrogen atmosphere: temperature: 180 °C; 20 RPM feeding/exiting; 50 RPM extrusion for 8 min; and purging with about 25 g raw LLDPE-118 between runs. FIG. 4 (A, B, D, and E) shows the uniform dispersion of Cu and F on the $TiO_2$ and the particle size of the Cu is much more smaller than that of Ag. The F is mostly dispersed on the $TiO_2$ as anticipated (FIG. 1). FIG. 4C and 4F reveal the particle size of $TiO_2$ (~25 nm) and the $TiO_2$ lattice fingers. Thus, from FIG. 4, the formation of Ag/Cu/$TiO_2$ system and the $TiO_2$ decorated by fluorine was demonstrated.

**Example 3**

**(Preparation of an molded article comprising the polymer composition of the present invention)**

The resulting composite of Example 2 was used to make 15 cm x 15 cm x 0.1 cm samples using compress molding using sheet/film casting (HOT Platen Press (P 200 S Collin) followed by compression molding. The sheet had an area of 15 x 15 cm and a thickness of 2 mm The temperature was 190 °C at a heating time of 5 min, a cooling time of 5 min, and a pressure of 80 bar.

**Example 4**

**(Analysis of the molded article comprising the polymer composition of the present invention)**

*SEM/EDX analysis.* Samples having a size 8 mm x 8 mm were cut from the film pieces and attached to twelve 5 m SEM stubs using sticky carbon tabs. The film sample were handled with clean tweezers and surfaces were not touched during sample preparation of 8 mm long film pieces that were cross sectioned using fresh stainless steel blades and attached to same SEM stubs. All samples were C evaporative coated for 1 sec. SEM EDX (FEI Quanta 200 with EDAX Octane Elect EDX System) was operated at the following settings such as acceleration voltage (20 KV), working distance (10 mm), spot size (4-5 μm), imaging mode (BSE), correction routine (eZAF). EDX analysis was performed in both area and spot modes. All contents are in weight and all samples showed fine C conducting coating cracks. FIG. 5 shows the SEM/EDX analysis of the films prepared under various process times during the compressed molding. The results revealed a detectible increase of the surface concentration of Ti from 0.2 wt.% to 0.7 wt.% after 5 and 30 min of holding time meanwhile the SEM images also showed the improvement of the particle density on the surface with time, indicating time-dependent surface migration resulted from surface energy differences of the additive particles and the polymer matrix.

**Example 5**

**(Antimicrobial testing of the molded article comprising the polymer composition of the present invention)**

A standardized test organism (*Staphylococcus aureus and Escherichia coli*) was inoculated onto the surface of test material. The standard specified an incubation period of 24 hours, but other time periods can be accommodated. Surviving microorganisms were counted to evaluate the antimicrobial activity of the test material. Counts are determined before and after incubation. Using the formula provided in the standard, the log of the difference between the 2 counts was determined to give a measurement of antimicrobial activity Equation (1).

$$R = \log \frac{\text{\# of bacteria untreated sample after 24 h (B)}}{\text{\# of bacteria treated sample after 24 h (C)}} = logB - \log C \qquad (1)$$

$$R = Antibacterial\ activity\ (> 2)$$

Antibacterial results of silver/Cupper based additives: T S, BZ, and Z indicate $TiO_2$, $SiO_2$, Beta-Zeolite, and ZnO are shown in FIG. 6 A/C= Ag/Cu (1:1) indicated the Ag/Cu mole ratio was 1:1; 100, 300, 500 indicated Ag/Cu concentrations were 100, 300, 500 ppm; R indicated the samples were reduced under $H_2$. LLDPE-118 was the plastic used as the host. FIG. 6 shows the antibacterial test results using different supports, including $TiO_2$, $SiO_2$, Beta-Zeolite, and ZnO. The active metal components were Ag, Cu and Zn. The Ag/Cu or Ag/Zn based antimicrobial additives showed high antibacterial efficacy regardless the support at 1 wt.% loading in LLDPE-118. Furthermore, the Ag/Cu (1:1) final loading were reduced from 500 to 100 ppm in LLDPE-118. The results indicate that the mixed metal-loaded metal oxide additives showed similar antibacterial activities and the antibacterial killing efficiency > 99% (R>2) at 100 ppm overall loading in LLDPE-118, suggesting they all are antibacterial additives according to ISO-22196 standards. Reduced metal Ag/Cu particles provide the advantage of better durability as the solubility of Ag/Cu particles is less than the $Ag_2O/CuO$ particles in the polymer matrix.

Although embodiments of the present application and their advantages have been described in detail, it should be understood that various changes, substitutions and alterations can be made herein without departing from the spirit and scope of the embodiments as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the above disclosure, processes, machines, manufacture, compositions of matter, means, methods, or steps, presently existing or later to be developed that perform substantially the same function or achieve substantially the same result as the corresponding embodiments described herein can be utilized. Accordingly, the appended claims are intended to include within their scope such processes, machines, manufacture, compositions of matter, means, methods, or steps.

## Claims

1. A germicidal polymer composition comprising:

   (a) a polymer matrix; and
   (b) a fluorinated germicidal additive dispersed throughout the polymer matrix and on a surface of the polymer composition, the fluorinated germicidal additive comprising a support attached to a germicidal metal compound and a hydrophobic fluorinated ligand.

2. The germicidal polymer composition of claim 1, wherein the germicidal metal comprises silver (Ag), copper (Cu), nickel (Ni), or any oxides, alloys, or combinations thereof.

3. The germicidal polymer composition of any one of claims 1 to 2, wherein the support comprises titanium oxide ($TiO_2$), zinc oxide (ZnO), silica ($SiO_2$), alumina ($Al_2O_3$), zeolite, or a combination thereof.

4. The germicidal polymer composition of any one of claims 1 to 3, wherein the hydrophobic fluorinated ligand comprises a fluorinated group having a formula of $CH_2CH_2(CF_2)_xCF_3$ where x is 0 to 10, preferably 7.

5. The germicidal polymer composition of any one of claims 1 to 4, wherein the hydrophobic fluorinated ligand has the structure of

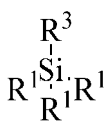 , 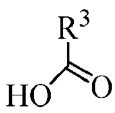 , 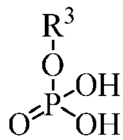 , 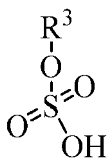

   where $R^1$ is a chloride or $OR^2$, $R^2$ is $C_nH_{2n+1}$, n ranges from 1 to 3, and $R^3$ is the fluorinated group,

wherein the hydrophobic fluorinated ligand is preferably

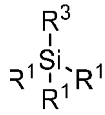

where $R^1$ is $OR^2$, or most preferably

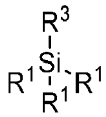

where $R^1$ is $C_2H_5$ and $R^3$ is $C_{10}H_4F_{17}$.

**6.** The germicidal polymer composition of any one of claims 1 to 5, wherein the polymer composition comprises a thermoplastic polymer, preferably a polyolefin polymer, a polycarbonate polymer, a modified rubber polymer, a nylon, a polyethylene terephthalate (PET), a polyvinyl chloride, or a combination thereof.

**7.** The germicidal polymer composition of any one of claims 1 to 6, wherein the metal compound comprises a bimetallic metal and/or trimetallic metal having a metal/metal ratio of 1:1 to 1:100.

**8.** The germicidal polymer composition of any one of claims 1 to 7, wherein the pore volume of the support is 0.1 to 10 mL($H_2O$)/g.

**9.** The germicidal polymer composition of any one of claims 1 to 8, wherein a content of the fluorinated germicidal additive in the polymer composition is 0.1 wt.% to 50 wt.% based on the total weight of the polymer composition.

**10.** The germicidal polymer composition of any one of claims 1 to 9, wherein at least a portion of the fluorinated germicidal additive is at a surface of the polymer composition, and preferably wherein a surface concentration of the fluorinated germicidal additive in the polymer composition is 0.01 wt.% to 10 wt.%, preferably 0.01 wt.% to 5 wt.%, more preferably 0.01 wt.% to 1 wt.% as determined by SEM/EDX.

**11.** The germicidal polymer composition of any one of claims 1 to 9, wherein the germicidal metal compound is a nanometal compound and a content of the germicidal nanometal compound in the fluorinated germicidal additive ranges from 1 ppm to 500,000 ppm, wherein the germicidal nanometal has a size of 15 nm to 30 nm, preferably 20 nm.

**12.** The germicidal polymer composition of any one of claims 1 to 10, wherein the germicidal polymer composition is effective against bacteria, fungi, and viruses, preferably the germicidal additive has an antibacterial efficacy of at least 80%, preferably 90%, more preferably 99% after 24 hours as measured by JISZ 2801:2010 method, wherein the bacteria comprise *Staphylococcus aureus* and *Escherichia coli.*

**13.** The germicidal polymer composition of any one of claims 1 to 11, wherein the polymer composition comprises at least a portion of an article of manufacture, preferably comprises at least a portion of a surface of the article of manufacture, and/or wherein polymer matrix of the polymer composition has a surface tension value of at least 10 $mN/cm^2$ greater than the germicidal additive surface tension value.

**14.** A method of preparing the germicidal polymeric composition of any one of claims 1 to 13, the method comprising extruding the fluorinated germicidal additive with the polymer composition at a temperature of 150 °C to 300 °C to produce the polymeric composition of any one of claims 1 to 13.

**15.** The method of claim 14, wherein the fluorinated germicidal additive is produced by:

(a) impregnating a support with metal precursor to form a metal oxide/support material;

(b) optionally reducing the metal oxide/support under a hydrogen atmosphere at 200 °C to 500 °C to produce a metal/support material; and
(c) contacting the metal oxide/support material, metal/support material, or both with a hydrophobic fluorinated ligand to produce the fluorinated germicidal additive.

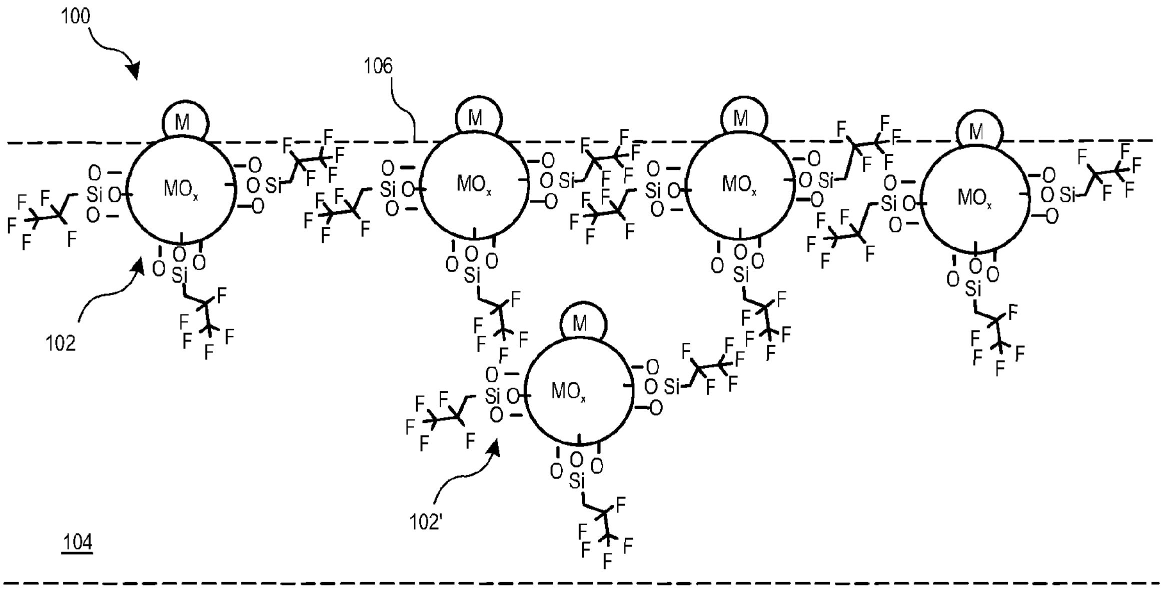


FIG. 1

(A)

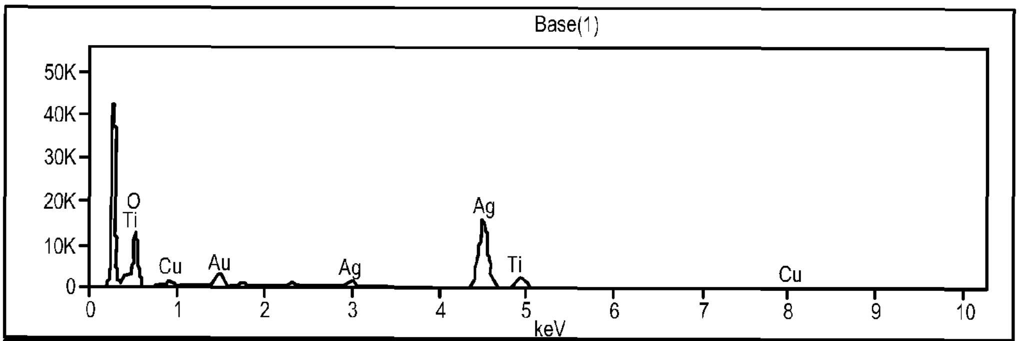


(B)

| Element | Base(2) | | | |
|---|---|---|---|---|
| | Intensity | Net Counts | Weight % | Align % |
| AgU | 0.00 | 60038 | 51.34 | 77.18 |
| Ti K | 0.00 | 291340 | 43.69 | 21.42 |
| Ti L | 0.00 | 0 | — | — |
| Cu K | 0.00 | 2854 | 1.94 | 0.73 |
| Cu L | 0.00 | 4479 | — | — |
| Ag L | 0.00 | 14876 | 3.03 | 0.67 |
| Ag M | 0.00 | 0 | — | — |
| | | | 100.00 | 100.00 |

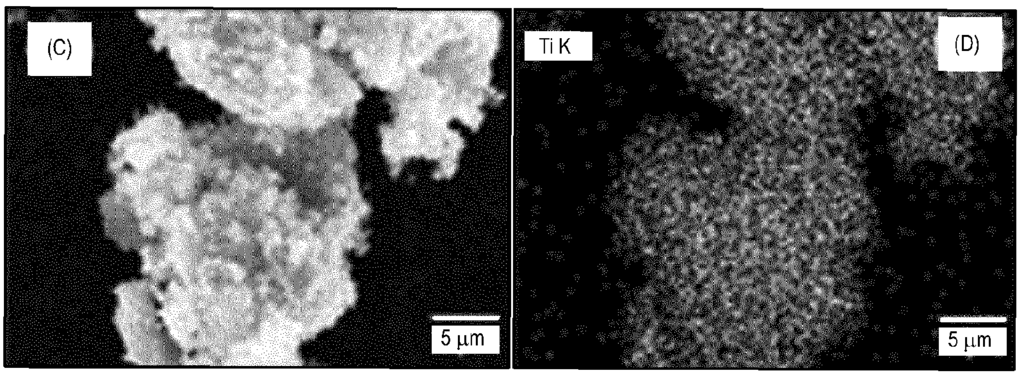


FIG. 2

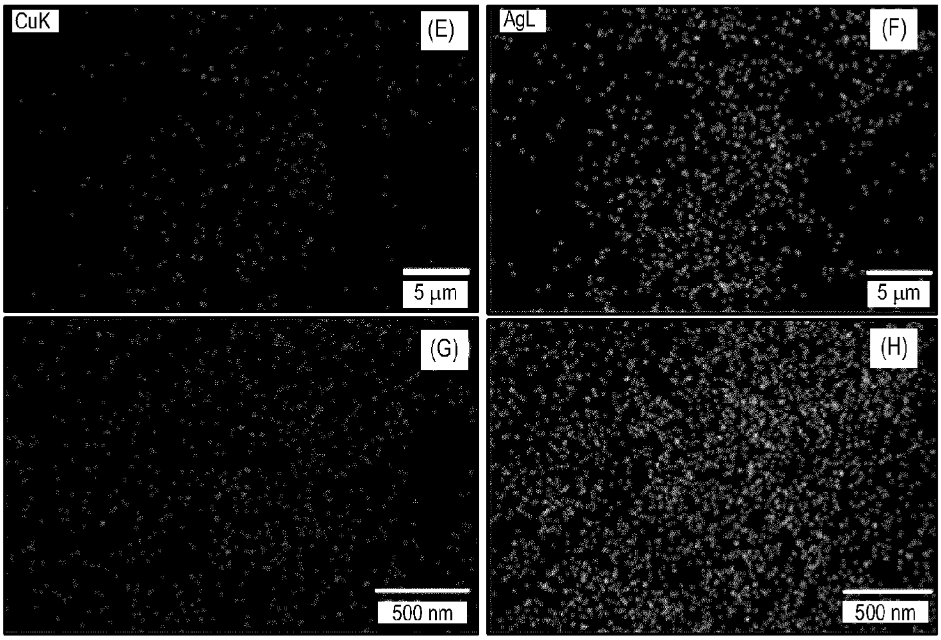


FIG. 2 (Continued)

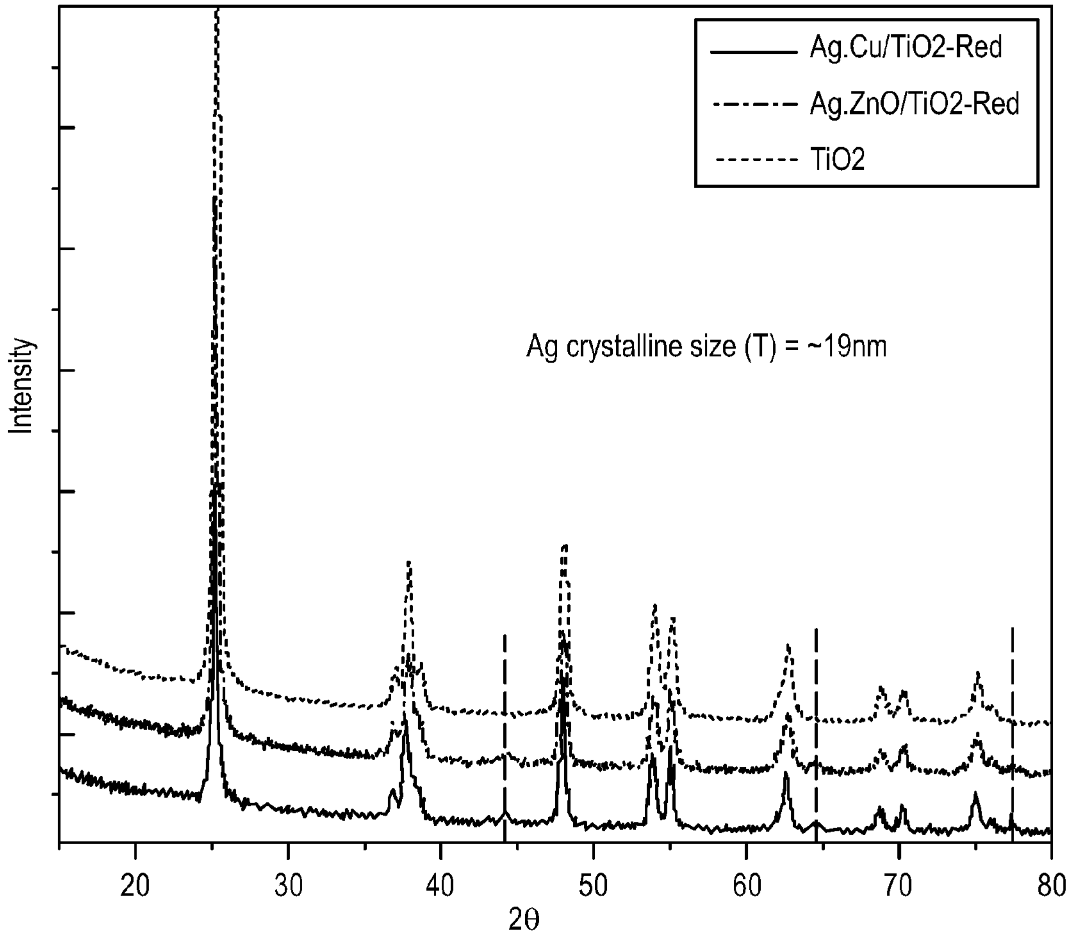


FIG. 3

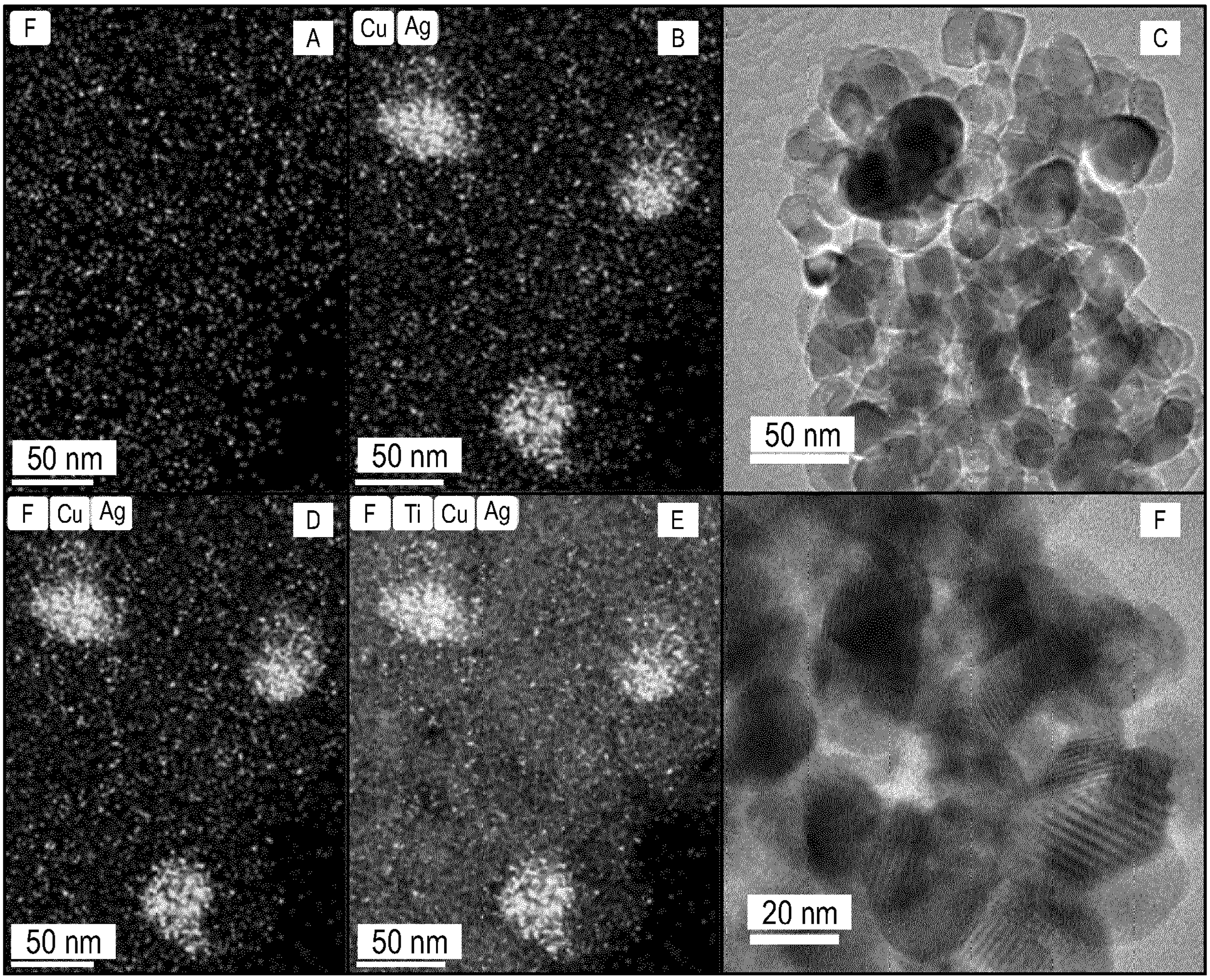


FIG. 4

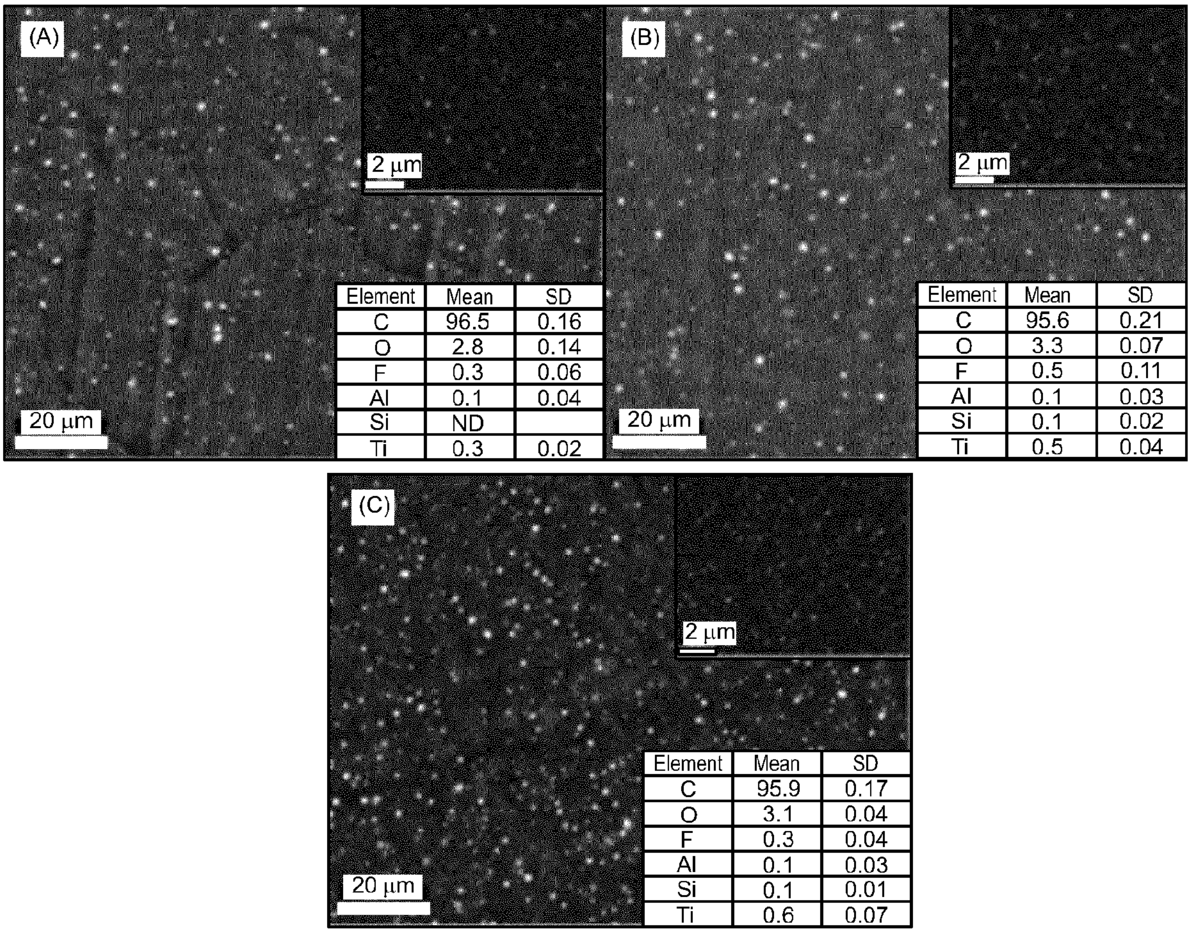
(A)
2 μm
20 μm

| Element | Mean | SD |
| --- | --- | --- |
| C | 96.5 | 0.16 |
| O | 2.8 | 0.14 |
| F | 0.3 | 0.06 |
| Al | 0.1 | 0.04 |
| Si | ND | |
| Ti | 0.3 | 0.02 |

(B)
2 μm
20 μm

| Element | Mean | SD |
| --- | --- | --- |
| C | 95.6 | 0.21 |
| O | 3.3 | 0.07 |
| F | 0.5 | 0.11 |
| Al | 0.1 | 0.03 |
| Si | 0.1 | 0.02 |
| Ti | 0.5 | 0.04 |

(C)
2 μm
20 μm

| Element | Mean | SD |
| --- | --- | --- |
| C | 95.9 | 0.17 |
| O | 3.1 | 0.04 |
| F | 0.3 | 0.04 |
| Al | 0.1 | 0.03 |
| Si | 0.1 | 0.01 |
| Ti | 0.6 | 0.07 |


FIG. 5

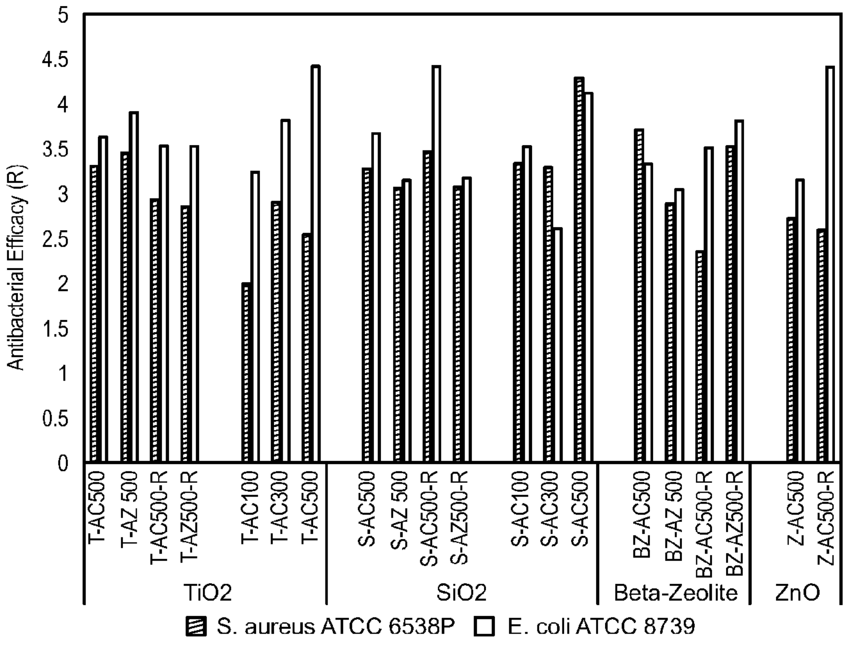
Antibacterial Efficacy (R)
0
0.5
1
1.5
2
2.5
3
3.5
4
4.5
5
T-AC500
T-AZ 500
T-AC500-R
T-AZ500-R
T-AC100
T-AC300
T-AC500
S-AC500
S-AZ 500
S-AC500-R
S-AZ500-R
S-AC100
S-AC300
S-AC500
BZ-AC500
BZ-AZ 500
BZ-AC500-R
BZ-AZ500-R
Z-AC500
Z-AC500-R
TiO2
SiO2
Beta-Zeolite
ZnO
S. aureus ATCC 6538P
E. coli ATCC 8739

FIG. 6

Europäisches Patentamt
European Patent Office
Office européen des brevets

# EUROPEAN SEARCH REPORT

Application Number
EP 22 21 0379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 199345<br>Thomson Scientific, London, GB;<br>AN 1993-357098<br>XP002809051,<br>-& JP H05 262603 A (MATSUSHITA ELEC IND CO LTD) 12 October 1993 (1993-10-12) | 1-6,8-15 | INV.<br>C08K9/06 |
| Y | * abstract *<br>* examples 1,2 *<br>* claims 1-3 *<br>----- | 7 | |
| X | WO 2022/026031 A1 (P&S GLOBAL HOLDINGS LLC [US]) 3 February 2022 (2022-02-03) | 1-15 | |
| Y | * examples *<br>* claims *<br>* figures 1,2,5 *<br>----- | 7 | |
| X | DATABASE WPI<br>Week 200026<br>Thomson Scientific, London, GB;<br>AN 2000-295668<br>XP002809052,<br>-& JP H11 246579 A (NIPPON CHEM IND CO LTD) 14 September 1999 (1999-09-14)<br>* abstract *<br>* paragraph [0006] *<br>* paragraph [0048] *<br>* claims *<br>-----<br>-/-- | 1-15 | TECHNICAL FIELDS SEARCHED (IPC)<br>C08K |

The present search report has been drawn up for all claims

1

| Place of search | Date of completion of the search | Examiner |
|---|---|---|
| Munich | 17 April 2023 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 22 21 0379

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI<br>Week 2020009<br>Thomson Scientific, London, GB;<br>AN 2020-A7531K<br>XP002809053,<br>-& CN 111 826 017 A (TONGXI GROUP CO LTD)<br>27 October 2020 (2020-10-27)<br>* abstract *<br>* paragraph [0018] *<br>* examples *<br>* claims *<br>----- | 1-15 | |

TECHNICAL FIELDS SEARCHED (IPC)

The present search report has been drawn up for all claims

1

| Place of search | Date of completion of the search | Examiner |
|---|---|---|
| Munich | 17 April 2023 | Russell, Graham |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 21 0379

This annex lists the patent family members relating to the patent documents cited in the above-mentioned European search report. The members are as contained in the European Patent Office EDP file on
The European Patent Office is in no way liable for these particulars which are merely given for the purpose of information.

17-04-2023

| Patent document cited in search report | Publication date | Patent family member(s) | Publication date |
|---|---|---|---|
| JP H05262603 A | 12-10-1993 | JP 3166277 B2 | 14-05-2001 |
| | | JP H05262603 A | 12-10-1993 |
| WO 2022026031 A1 | 03-02-2022 | WO 2022026031 A1 | 03-02-2022 |
| | | WO 2022026750 A1 | 03-02-2022 |
| JP H11246579 A | 14-09-1999 | NONE | |
| CN 111826017 A | 27-10-2020 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 11052385 B, Van Buskirk
- CN 11336886, Wenming